# EUROPEAN PATENT APPLICATION

(11) **EP 4 780 052 A1**
(43) Date of publication of application: **22.07.2026**
(21) Application number: 23955099.9
(22) Date of filing: 11.10.2023
(51) Int. Cl.: H04W 24/04

(54) **MOBILE SENSING METHOD, MOBILE SENSING SYSTEM, SOURCE NODE AND TARGET NODE**

(71) Applicant: HUAWEI TECHNOLOGIES CO., LTD., Shenzhen 518129 (CN)
(72) Inventor: LI, Zhongfeng, Shenzhen, Guangdong 518129 (CN); MA, Jianglei, Shenzhen, Guangdong 518129 (CN)
(74) Representative: Goddar, Heinz J.
(86) International application number: PCT/CN2023/123921
(87) International publication number: WO 2025/076713

(57) **Abstract**

A mobile sensing method, a mobile sensing system, a source node, and a target node are provided, which are applied to the field of wireless communication and are used to implement mobile sensing management on a terminal device. The method in this application includes: obtaining sensing information of the terminal device, where the sensing information includes location information; and sending a change request to the target node, where the change request includes the sensing information, and the change request is used to request the target node to maintain the terminal device. In embodiments of this application, a change message is transferred, so that the target node can maintain sensing management for the terminal device, thereby effectively reducing resource waste and additional signaling overheads caused by invalid beams.

## Description

### TECHNICAL FIELD

Embodiments of this application relate to the field of wireless communication, and in particular, to a mobile sensing method, a mobile sensing system, a source node, and a target node.

### BACKGROUND

With large-scale popularization of internet applications and wireless network devices, people's requirements for wireless communication further increase. A future communication system will be a system with integrated sensing and communication. In other words, the communication system provides sensing measurement capabilities in addition to enhanced communication capabilities. The system with integrated sensing and communication can sense and describe an environment through transmission, reflection, or scattering of radio waves, to perform simultaneous localization and mapping (simultaneous localization and mapping, SLAM) and the like.

In a 5th generation mobile communication technology (5th generation mobile communication technology, 5G) network, a terminal device has three radio resource control (radio resource control, RRC) connection states: an idle (idle) state, an inactive (inactive) state, and a connected state. Mobile management of the terminal device in the inactive state is performed on a terminal device side, and paging of the terminal device in the inactive state by a network side depends on an access network notification area (RAN notification area, RNA). When the network side needs to transfer a message to the terminal device, the network side initiates paging. The network side needs to perform multi-beam paging in each of a plurality of cells in the RNA. Mobile management of the terminal device in the idle state is performed on the terminal device side, and paging of the terminal device in the idle state by the network side depends on a tracking area (tracking area, TA). The network side needs to perform multi-beam paging in each of a plurality of cells corresponding to the TA. Each TA includes a plurality of RNAs, and each RNA includes a plurality of cells.

In a paging process, in one RNA or TA, beams used for paging in a cell other than a cell in which the terminal device is located are invalid beams, causing resource waste and additional signaling overheads.

### SUMMARY

Embodiments of this application provide a mobile sensing method, a mobile sensing system, a source node, and a target node, which are applied to the field of wireless communication and are used to implement mobile sensing management on a terminal device.

A first aspect of embodiments of this application provides a mobile sensing method. In the method, a first node is a current maintenance node of a terminal device, and is configured to obtain, store, or update sensing information of the terminal device. When channel quality between the first node and the terminal device deteriorates or is lower than a specific threshold, the first node needs to search for another node to serve as a maintenance node of the terminal device. After the first node determines a second node that meets a change condition, the first node sends a change request to the second node, to request the second node to perform sensing maintenance on the terminal device as the maintenance node of the terminal device. In this case, the first node is referred to as a source node, and the second node is referred to as a target node. The change request sent by the source node to the target node includes the sensing information for performing sensing measurement on the terminal device, where the sensing information includes at least location information of the terminal device. The source node or the target node may locate the terminal device based on the location information.

In this embodiment of this application, the source node sends the change request to the target node, so that the target node can locate the terminal device based on the sensing information in the change request, thereby implementing sensing management on the terminal device. When receiving a paging message, the target node may locate the terminal device and page the terminal device, thereby reducing invalid beams, and avoiding resource waste and additional signaling overheads.

In some optional implementations, the location information of the terminal device includes at least one of a coordinate location, a distance, a speed, an angle, and a movement direction of the terminal device. The location information may be location information of the terminal device relative to the source node, or may be location information of the terminal device relative to the target node.

In this embodiment of this application, the source node or the target node may locate the terminal device based on the location information. In addition, based on the location information, the source node or the target node is capable of performing sensing-based localization on a passive terminal device.

In some optional implementations, the sensing information further includes at least one of signal strength from the source node to the terminal device or from the target node to the terminal device, a delay, a Doppler frequency shift, a component of each path of a multipath, beam information, measurement time, a time interval, a quantity of measurements, and an identifier, a type, a shape, a material, a size, or an image of the terminal device.

In this embodiment of this application, the information included in the sensing information can enable the source node or the target node to perform sensing-based localization on the terminal device, and avoid additional power consumption, signaling overheads, and a delay due to sensing-based localization on the terminal device in the inactive state or the connected state when there is no data transmission or no piggybacking opportunity. In addition, because a discontinuous reception (discontinuous reception, DRX) cycle is configured for the terminal device in the inactive state or the idle state, the information included in the sensing information can enable the source node or the target node to reduce, when the terminal device wakes up, a delay and power consumption caused by beam alignment.

In some optional implementations, the source node is connected to a relay node, the relay node is responsible for sensing the terminal device, and the source node receives a sensing result from the relay node and obtains sensing information through calculation based on the sensing result. The sensing information further includes at least one of an identifier of the relay node, beam information from the relay node to the terminal device, location information of the relay node, channel quality from the source node to the relay node, and channel quality from the target node to the relay node.

In this embodiment of this application, using the relay node to perform sensing measurement may expand a sensing measurement range of a base station, and may also share load of the base station on sensing measurement. Compared with directly using the base station to perform sensing measurement, using the relay node to perform sensing measurement in a local area may further reduce interference in a cell and reduce power consumption of the base station.

In some optional implementations, the terminal device may be a low-power terminal device or a terminal device in a non-connected state, and the terminal device in the non-connected state includes a passive terminal device, a terminal device in an idle state, and a terminal device in an inactive state.

In this embodiment of this application, the sensing measurement performed by the source node or the target node on the terminal device may be transparent to the terminal device, that is, the terminal device is unaware of a measurement signal sent by the source node or the target node to the terminal device. Therefore, even if the terminal device does not participate in signaling transmission, the source node or the target node can still obtain the sensing information of the terminal device, thereby helping the terminal device save power. In addition, for a terminal device in an RRC state like an inactive state or an idle state, a change from UE-controlled mobility to network-controlled mobility may be implemented. In addition, because the terminal device does not need to participate in signaling interaction, sensing information of the low-power terminal device and the terminal device in the non-connected state can also be obtained with a low delay.

In some optional implementations, if the terminal device is a low-power terminal device or a terminal device in an idle state, the identifier of the terminal device may be a sensing-radio network temporary identifier (sensing-radio network temporary identifier, SE-RNTI) or a shortened-temporary mobile subscription identifier (shortened-temporary mobile subscription identifier, S-TMSI). A part of the SE-RNTI is configured by a core network or the maintenance node, and corresponds to the terminal device or the sensing information of the terminal device. The other part corresponds to the current maintenance node of the terminal device, where the current maintenance node includes the source node or the target node.

In this embodiment of this application, because the identifier of the terminal device in the idle state is configured by the core network or the maintenance node, the core network, the maintenance node and a last serving node of the terminal device can unify the identifier of the terminal device. When receiving the paging message, the maintenance node can more quickly determine the terminal device that needs to be paged, thereby reducing a delay.

In some optional implementations, if the terminal device is a passive terminal device, a part of the identifier of the terminal device includes an identifier of the passive terminal device, and corresponds to the passive terminal device, and the other part corresponds to the current maintenance node of the terminal device and/or a beam used by the terminal device.

In some optional implementations, the identifier of the passive terminal device may be a shared identifier. For example, a plurality of passive terminal devices that are in a same cell or that use a same beam may share one shared identifier. Terminal devices with a same shared identifier may be distinguished based on corresponding sensing information.

In this embodiment of this application, because the passive terminal device does not receive a paging message, the plurality of passive terminal devices that are in the same cell or use the same beam may share one shared identifier, to reduce a requirement for a large quantity of identifiers.

In some optional implementations, the identifier of the terminal device is from the last serving node (last serving gNodeB) of the terminal device.

In some optional implementations, after the source node sends the change request to the target node, the target node determines whether to serve as the maintenance node of the terminal device. After the target node makes an acknowledgment, the source node receives a change acknowledgment message from the target node.

In this embodiment of this application, using the relay node to perform sensing measurement may expand the sensing measurement range of the base station, and may also share the load of the base station on sensing measurement. Compared with directly using the base station to perform sensing measurement, using the relay node to perform sensing measurement in the local area may further reduce the interference in the cell and reduce the power consumption of the base station.

In some optional implementations, the source node receives a paging message from the core network or the last serving node of the terminal device, where the paging message includes the identifier of the terminal device. The source node forwards the paging message to the target node.

In some optional implementations, before the source node sends the change request to the target node, the source node needs to determine, from a plurality of surrounding nodes, the target node that meets the change condition. The source node sends a sensing request message to the plurality of surrounding nodes, to request the surrounding nodes to perform sensing measurement on the terminal device. The source node receives a first feedback message from the plurality of surrounding nodes, where the first feedback message may include a sensing measurement result of the terminal device obtained by a neighboring node, and the source node judges, based on the sensing measurement result and the change condition, whether the node meets the change condition. The first feedback message may alternatively include a determining result, where the determining result is obtained by a neighboring node based on a sensing measurement result of the terminal device and the change condition, and indicates whether the sensing measurement result of the node meets the change condition, and then the determining result is sent to the source node.

In some optional implementations, the source node is connected to the relay node, and when the channel quality from the source node to the relay node deteriorates or is lower than a specific threshold, the source node triggers a relay handover, or when the relay node finds that channel quality to a third node is better than the channel quality to the source node, the relay node triggers a relay handover. The source node receives channel quality information from the relay node, where the channel quality information is obtained by the relay node by measuring a synchronization signal (synchronization signal block, SSB) or a channel state information reference symbol (channel state information reference signal, CSI-RS) from the source node and the third node. The source node receives a second feedback message, where the second feedback message includes a sensing measurement result from the third node and a sensing measurement result from the relay node. The source node determines, based on the second feedback message and the channel quality information, whether the third node meets the change condition.

In some optional implementations, if the source node is connected to the relay node, in addition to sending the change request to the target node, the source node further sends a relay handover request to the target node, to migrate the relay node to the target node. The target node maintains the terminal device via the relay node.

In some optional implementations, the source node sends an identifier of the target node and the identifier of the terminal device to the core network or the last serving node of the terminal device.

In this embodiment of this application, the last serving node of the terminal device is an anchor for establishing a connection between the terminal device and the core network. The source node sends an identifier of the current maintenance node and the identifier of the terminal device to the last serving node or the core network, so that when there is a paging message, the core network or the last serving node can directly find the current maintenance node, and the terminal device can be paged by the current maintenance node by using the beam information corresponding to the terminal device based on the sensing information, which helps reduce beam sweeping overheads and reduce power consumption and a delay of detection on the terminal device. In addition, the beam information corresponding to the terminal device is used during paging, which helps reduce a delay of searching for and aligning a sending beam and a receiving beam when the terminal device wakes up in a DRX cycle.

In some optional implementations, the source node obtains the sensing information in the following manner: receiving the sensing information from another node or obtaining the sensing information through sensing measurement calculation.

In some optional implementations, the terminal device may obtain a sensing measurement result, where the sensing measurement result may be obtained by the source node through sensing measurement, or may be received from another node. The terminal device may obtain the sensing information through calculation based on a plurality of sensing measurement results.

In this embodiment of this application, the sensing information obtained through calculation based on the plurality of sensing measurement results can more accurately indicate information about the terminal device.

In some optional implementations, the source node may determine whether to perform a change based on the signal strength from the source node to the terminal device or based on the signal strength from the target node to the terminal device. For example, when the signal strength from the source node to the terminal device is less than a preset value, the source node starts to search for the target node that meets the change condition; or when signal strength from a node to the terminal device is greater than the signal strength from the source node to the terminal device, the source node receives information about the signal strength from the node to the terminal device, and determines whether to send a change request to the node.

In some optional implementations, the source node may send a first capability message to the target node, to indicate that the source node has a sensing management function (sensing management function, SEMF). The source node may also receive a second capability message from the target node, to indicate that the target node has the SEMF.

In this embodiment of this application, the SEMF is deployed on the source node or the target node. Compared with deploying the SEMF on the core network, a delay in obtaining the sensing measurement result by the source node or the target node is reduced. This helps perform network topology optimization on a node side, and improves system performance.

A second aspect of embodiments of this application provides a mobile sensing method. In the method, a target node receives a change request from a source node, where the change request includes sensing information, and the sensing information includes location information. As a maintenance node of a terminal device, the target node performs sensing measurement on the terminal device, and is responsible for storing and/or updating the sensing information.

In this embodiment of this application, the maintenance node is changed from the source node to the target node by using the change request. Therefore, the target node can maintain sensing management on the terminal device. When receiving a paging message, the target node can page the terminal device based on the sensing information, thereby reducing resource waste and additional signaling overheads caused by invalid beams.

In some optional implementations, the location information of the terminal device includes at least one of a coordinate location, a distance, a speed, an angle, and a movement direction of the terminal device. The location information may be location information of the terminal device relative to the source node, or may be location information of the terminal device relative to the target node.

In some optional implementations, the sensing information further includes at least one of signal strength from the source node to the terminal device or from the target node to the terminal device, a delay, a Doppler frequency shift, a component of each path of a multipath, beam information, measurement time, a time interval, a quantity of measurements, and an identifier, a type, a shape, a material, a size, or an image of the terminal device.

In some optional implementations, the terminal device may be a low-power terminal device or a terminal device in a non-connected state, and the terminal device in the non-connected state includes a passive terminal device, a terminal device in an idle state, and a terminal device in an inactive state.

In some optional implementations, if the terminal device is a low-power terminal device or a terminal device in an idle state, the identifier of the terminal device may be an SE-RNTI or an S-TMSI. A part of the SE-RNTI is configured by a core network or the maintenance node, and corresponds to the terminal device or the sensing information of the terminal device. The other part corresponds to the current maintenance node of the terminal device, where the current maintenance node includes the source node or the target node.

In some optional implementations, if the terminal device is a passive terminal device, a part of the identifier of the terminal device includes an identifier of the passive terminal device, and corresponds to the passive terminal device, and the other part corresponds to the current maintenance node of the terminal device and/or a beam used by the terminal device.

In some optional implementations, the identifier of the passive terminal device may be a shared identifier. For example, a plurality of passive terminal devices that are in a same cell or that use a same beam may share one shared identifier. Terminal devices with a same shared identifier may be distinguished based on corresponding sensing information.

In some optional implementations, after receiving the change request, the target node starts a timer, and sends a change acknowledgment message to the source node after time expires.

In some optional implementations, the target node receives a sensing request message sent by the source node, and performs sensing measurement on the terminal device based on the sensing request message. The target node sends a first feedback message to the source node, where the first feedback message may include a sensing measurement result, and then the source node determines, based on the sensing measurement result, whether the target node meets a change condition. The first feedback message may alternatively include a determining result, where the determining result is obtained by the target node based on the sensing measurement result and the change condition, and indicates that the target node meets the change condition.

In some optional implementations, if the source node is connected to a relay node, the target node further receives a relay handover request in addition to the change request from the source node, where the relay handover request indicates the relay node to migrate to the target node, and the target node maintains the terminal device via the relay node.

In some optional implementations, the target node sends a second indication message to the core network or a last serving node of the terminal device, where the second indication message includes an identifier of the target node and the identifier of the terminal device.

In this embodiment of this application, when the core network needs to page the terminal device, the core network or the last serving node of the terminal device may directly send a paging message to the target node, which reduces invalid beams, and avoids resource waste and additional signaling overheads.

In some optional implementations, the target node receives a paging message from the source node, the core network, or the last serving node of the terminal device. Then, the target node forwards the paging message to the terminal device.

In some optional implementations, the target node sends the sensing measurement result to the source node, where the sensing measurement result is obtained by the target node by performing sensing measurement on the terminal device.

In some optional implementations, when the target node finds that the signal strength from the target node to the terminal device is continuously better than the signal strength from the source node to the terminal device, the target node sends, to the source node, information about the signal strength from the target node to the terminal device, and then the source node determines whether to send the change request to the target node.

In some optional implementations, the target node may receive a first capability message from the source node, to indicate that the source node has a sensing management function SEMF. The target node may also send a second capability message to the source node, to indicate that the target node has the SEMF.

A third aspect of embodiments of this application provides a source node, including:
an obtaining unit, configured to obtain sensing information of a terminal device, where the sensing information includes location information; and
a sending unit, configured to send a change request to a target node, where the change request includes the sensing information, and the change request is used to request the target node to maintain the terminal device.

A fourth aspect of embodiments of this application provides a target node, including:
a receiving unit, configured to receive a change request from a source node, where the change request includes sensing information, and the sensing information includes location information; and
a sensing measurement unit, configured to perform sensing measurement on a terminal device.

A fifth aspect of embodiments of this application provides a source node, including:
a processor and a memory, where the processor is coupled to the memory;
the memory is configured to store a program; and
the processor is configured to execute the program in the memory, to enable the source node to perform the method according to any one of claims 1 to 14.

A sixth aspect of embodiments of this application provides a target node, including:
a processor and a memory, where the processor is coupled to the memory;
the memory is configured to store a program; and
the processor is configured to execute the program in the memory, to enable the target node to perform the method according to any one of claims 15 to 27.

A seventh aspect of embodiments of this application provides a mobile sensing system, including:
the source node according to the first aspect, and the target node according to the second aspect;
   or
a relay node, the source node according to the first aspect, and the target node according to the second aspect;
   or
a core network node, the source node according to the first aspect, and the target node according to the second aspect.

An eighth aspect of embodiments of this application provides a computer-readable storage medium, including instructions. When the instructions are run on a computer, the computer is caused to perform the method according to the first aspect, or the computer is caused to perform the method according to the second aspect.

### BRIEF DESCRIPTION OF DRAWINGS

FIG. 1 is a diagram of a network architecture according to an embodiment of this application;
FIG. 2 is a diagram of a system architecture of a mobile sensing method according to an embodiment of this application;
FIG. 3 is a diagram of an embodiment of a mobile sensing method according to an embodiment of this application;
FIG. 4 is a diagram of another system architecture of a mobile sensing method according to an embodiment of this application;
FIG. 5 is a diagram of another embodiment of a mobile sensing method according to an embodiment of this application;
FIG. 6 is a diagram of another system architecture of a mobile sensing method according to an embodiment of this application;
FIG. 7A and FIG. 7B are diagrams of another embodiment of a mobile sensing method according to an embodiment of this application;
FIG. 8 is a diagram of another system architecture of a mobile sensing method according to an embodiment of this application;
FIG. 9 is a diagram of another embodiment of a mobile sensing method according to an embodiment of this application;
FIG. 10 is a diagram of an embodiment of a source node according to embodiment of this application;
FIG. 11 is a diagram of an embodiment of a target node according to an embodiment of this application;
FIG. 12 is a diagram of another embodiment of a source node according to an embodiment of this application; and
FIG. 13 is a diagram of another embodiment of a target node according to an embodiment of this application.

### DESCRIPTION OF EMBODIMENTS

Embodiments of this application provide a mobile sensing method, a mobile sensing system, a source node, and a target node, which are applied to the field of wireless communication and are used to implement mobile sensing management on a terminal device.

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are used to distinguish between similar objects but do not necessarily indicate a specific order or sequence. It should be understood that the terms used in such a way are interchangeable in proper circumstances, which is merely a manner of differentiation that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

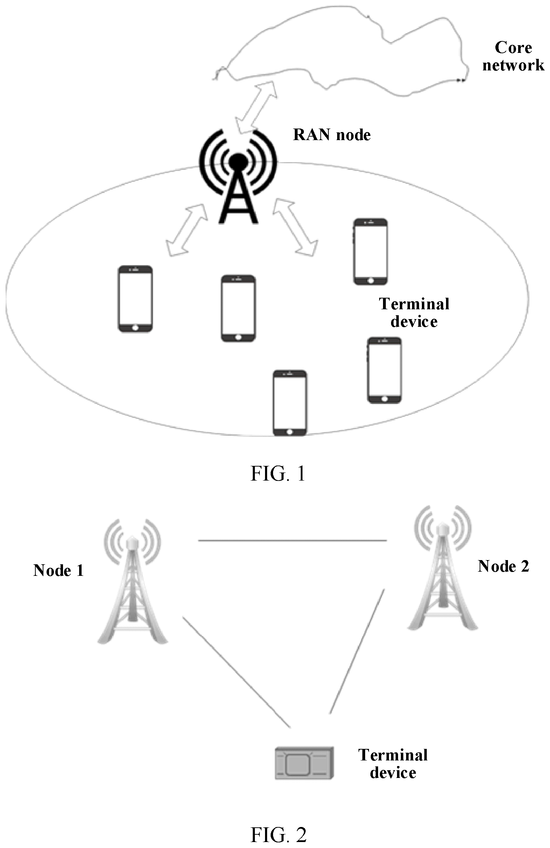

Refer to FIG. 1. The following briefly describes a network architecture on which a mobile sensing method in embodiments of this application is based.

The network architecture includes a core network, an access network (radio access network, RAN) node, and a terminal device. Sensing signaling transmission may occur between the core network and the RAN node, or between the core network and the terminal device, or may occur between the RAN node and the terminal device. The RAN node is responsible for sending and receiving a sensing measurement signal. When an SEMF is configured for the RAN node, the RAN node has a function of synthesizing or calculating a received sensing measurement result to obtain sensing information.

The RAN node may be a network node, and sensing signaling transmission is performed between RAN nodes through an Xn interface. Alternatively, the RAN node may be another node, for example, a user equipment (user equipment, UE) node, and sidelink transmission is performed between RAN nodes. The network node may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network node may be a gNB or a transmission point (TRP or TP) in a 5G system, or one antenna panel or a group of antenna panels (including a plurality of antenna panels) of a base station in the 5G system, or may be a network node, for example, a baseband unit (baseband unit, BBU) or a distributed unit (distributed unit, DU), that constitutes a gNB or a transmission point.

The terminal device may be UE, an access terminal, a subscriber unit, a subscriber station, a mobile station, a remote station, a remote terminal, a mobile device, a user terminal, a terminal, a wireless communication device, a user agent, or a user apparatus, or may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in this application.

In embodiments of this application, the terminal device may be a terminal device in a connected state, or may be a terminal device in a non-connected state, or may be a low-power terminal device. This is not specifically limited herein. The low-power device corresponds to a power-sensitive device or a terminal device in a low power consumption state, and may be a terminal device in an RRC connected state, or may be a terminal device in an RRC idle state, or may be a terminal device in an RRC inactive state. This is not specifically limited herein. The terminal device in the non-connected state includes a passive terminal device, a terminal device in an idle state, or a terminal device in an inactive state. This is not specifically limited herein. The passive terminal device does not have a communication function, and only reflects a sensing signal based on a physical characteristic of the passive terminal device.

Based on the foregoing architecture, in embodiments of this application, the RAN node is responsible for periodically sending the sensing measurement signal to the terminal device, and obtaining sensing information of the terminal device through calculation based on a reflected signal of the sensing measurement signal. The RAN node is responsible for storing and updating the sensing information of the terminal device. The RAN node is referred to as a current maintenance node of the terminal device. Maintaining the terminal device may be storing the sensing information of the terminal device, or may be identifying a feature like a shape, a size, or an image of the terminal device, or may be storing state information of the terminal device, such as signal strength, a delay, a Doppler frequency shift, a component of each path of a multipath, measurement time, a time interval, a quantity of measurements, or beam information obtained by measuring a signal by the maintenance node, or may be maintaining the sensing information, the state information, or association information of the terminal device. This is not specifically limited herein.

Mobile sensing includes sensing measurement and maintenance change. When the terminal device moves, or does not move but due to an impact of an environment change, the maintenance node finds that signal quality from the node to the terminal device deteriorates or signal quality from another node to the terminal device is stronger, the maintenance node determines the another node as a target node, and the current maintenance node sends a change request as a source node, so that the target node serves as a maintenance node of the terminal device, and is responsible for maintaining the sensing information of the terminal device. Information obtained by the maintenance node is sensing information, which is also referred to as sensing context information, sensing state information, or sensing association information.

There may be a plurality of scenarios in which the RAN node performs mobile sensing on the terminal device. The following separately describes the scenarios.
1. The RAN node directly maintains the terminal device.

Refer to FIG. 2. In this scenario, both a node 1 and a node 2 are RAN nodes. Serving as a maintenance node of the terminal device, the node 1 maintains the terminal device, and the node 2 is a neighboring node of the node 1. When the node 1 finds that signal quality from the node 1 to the terminal device is not good enough, for example, is lower than a first threshold, or when signal quality from the node 2 to the terminal device is greater than a second threshold, the maintenance node of the terminal device may be changed from the node 1 to the node 2. After the change, the node 1 or the node 2 may send an identifier of the current maintenance node and an identifier of the terminal device to a node 3, or may update a locally stored identifier of the current maintenance node and a locally stored identifier of the terminal device. The node 3 may be a core network node, or may be a last serving node of the terminal device.

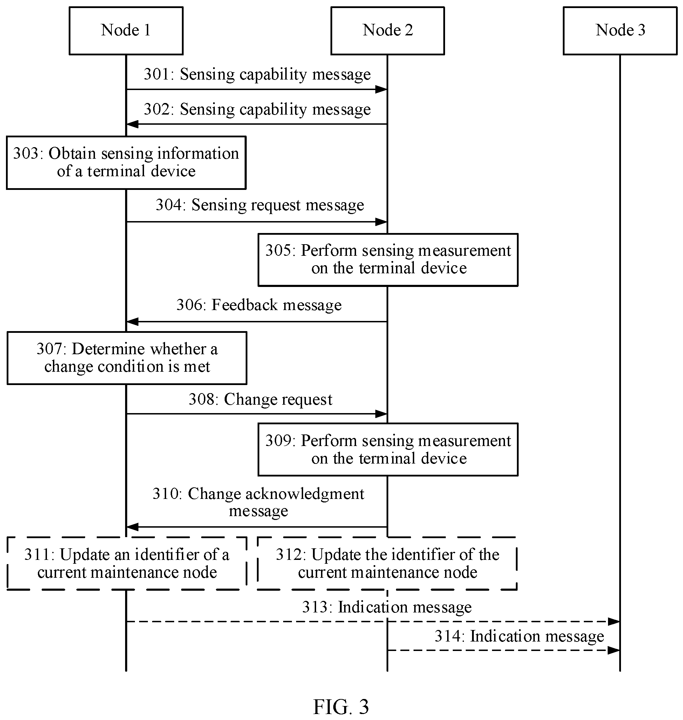

Refer to FIG. 3. In this scenario, a mobile sensing method in an embodiment of this application includes the following steps.

301: A node 1 sends a sensing capability message to a node 2.

The node 1 sends the sensing capability message to the node 2, where the sensing capability message indicates that the node 1 has an SEMF. The SEMF is responsible for coordination, scheduling, and configuration of sensing measurement and resource reporting, and is also responsible for calculation or verification of a final sensing result, for example, final location information that meets a requirement, or speed estimation including estimation precision. RAN nodes need to interact with each other, to determine whether the RAN nodes support the SEMF.

In practice, the sensing capability message may include a duplex capability of a node, and indicates that the node has a full-duplex capability or a half-duplex capability.

302: The node 2 sends a sensing capability message to the node 1.

The node 2 sends the sensing capability message to the node 1, where the sensing capability message indicates that the node 2 has the SEMF.

In this embodiment of this application, because the duplex capability affects receiving time of a sensing measurement signal, and the SEMF affects synthesis or operation of a sensing measurement result, sending and receiving of the sensing capability message help a maintenance node obtain more accurate sensing information.

303: The node 1 obtains sensing information of a terminal device.

The node 1 obtains a sensing measurement result of the terminal device through sensing measurement and/or with reference to historical connected state information. Sensing measurement includes active sensing measurement and/or cooperative sensing measurement. Active sensing measurement is self-sensing. The node 1 sends a sensing measurement signal to the terminal device, and the node 1 receives a reflected signal of the sensing measurement signal, and then obtains a first sensing measurement result based on the sensing measurement signal and the reflected signal. The first sensing measurement result may include location information of the terminal device relative to the node 1, for example, a coordinate location, a distance, a speed, an angle, or a movement direction of the terminal device, or may alternatively include signal strength, a delay, a Doppler frequency shift, a component of each path of a multipath, or beam information of the reflected signal received by the source node. Cooperative sensing measurement requires participation of at least two nodes, for example, the node 1 and the node 2. The node 1 sends a sensing measurement request to the node 2, to indicate the node 2 to send a sensing measurement signal, and then the node 1 receives a reflected signal of the sensing measurement signal, and obtains a second sensing measurement result. Alternatively, the node 1 may send a sensing measurement signal to the terminal device, and send configuration information of the sensing measurement signal to the node 2. Then, the node 2 receives a reflected signal of the sensing measurement signal, and obtains a third sensing measurement result based on the reflected signal. The node 2 sends the third sensing measurement result to the node 1. The third sensing measurement result may include location information of the terminal device relative to the node 2, for example, a coordinate location, a distance, a speed, an angle, or a movement direction of the terminal device, or may alternatively include signal strength, a delay, a Doppler frequency shift, a component of each path of a multipath, measurement time, a time interval, a quantity of measurements, or beam information of the reflected signal received by the target node. Alternatively, the node 1 may send a sensing measurement request to the node 2, to indicate the node 2 to send a sensing measurement signal. The node 2 receives a reflected signal of the sensing measurement signal, and obtains a fourth sensing measurement result. The node 2 sends the fourth sensing measurement result to the node 1. If the node 2 has the SEMF, the node 2 may directly obtain the sensing information based on the third sensing measurement result or the fourth sensing measurement result, and send the sensing information to the node 1. This is not specifically limited herein.

The node having the SEMF may further obtain an identifier, a type, a shape, a material, a size, or an image of the terminal device based on the sensing measurement result.

In practice, if the node 1 has the SEMF, the node 1 may obtain the sensing information based on any one of the first sensing measurement result, the second sensing measurement result, the third sensing measurement result, or the fourth sensing measurement result, or may process a plurality of sensing measurement results, for example, calculate an average, to obtain the sensing information. This is not specifically limited herein.

The node 1 may send a request to a last serving node of the terminal device, and receive historical RRC connected state information of the terminal device from the last serving node. The last serving node of the terminal device is a network node to which the terminal device is attached before the terminal device changes from a connected state to an idle state or an inactive state, and stores context information of the terminal device in the connected state. Therefore, the node 1 may obtain the context information of the terminal device from the last serving node. In practice, the core network may inform, as required, the last serving node of reserving all or a part of context information of the terminal device in the idle state. The context information is context information corresponding to the terminal device in the connected state or the inactive state.

In practice, the node 1 may directly use all or a part of information in the context information as the sensing information, or may combine the context information and the sensing measurement result into the sensing information, or may generate new sensing information through sensing measurement.

The sensing information includes the location information of the terminal device, and the location information includes at least one of the coordinate location, the distance, the speed, the angle, and the movement direction of the terminal device. In practice, the sensing information may further include at least one of signal strength from a node to the terminal device, a delay, a Doppler frequency shift, a component of each path of a multipath, measurement time, beam information, a time interval, and a quantity of measurements. The information may be a specific value, or may be an interval. A reference node of the foregoing value may be the node 1 or the node 2. To be specific, the sensing information may include first sensing information of the terminal device relative to the node 1, or may include second sensing information of the terminal device relative to the node 2, or may include both the first sensing information and the second sensing information.

The sensing information may further include the identifier, the type, the shape, the material, the size, or the image of the terminal device. If the terminal device is a low-power terminal device or a terminal device in an idle state, the core network or the maintenance node of the terminal device may configure a dedicated SE-RNTI for the terminal device, and configure the dedicated SE-RNTI for the last serving node of the terminal device. A part of the SE-RNTI is configured by the core network, corresponds to the terminal device, and may be the identifier of the terminal device, for example, an S-TMSI or a temporary mobile subscription identifier (temporary mobile subscription identifier, TMSI), or may be the sensing information of the terminal device, and is configured by the maintenance node. The sensing information and the corresponding identifier are sent by the maintenance node to the last serving node, and each requester may find the terminal device by using the last serving node. The other part corresponds to the identifier of the current maintenance node, and may be indicated by a string of binary digits, for example, a value of 20 bits. When the core network sends a paging message to the terminal device, the paging message reaches the maintenance node through the last serving node, and the maintenance node can determine, based on the SE-RNTI, the terminal device that needs to be paged. In practice, the S-TMSI or the TMSI may directly identify the terminal device. This is not specifically limited herein. The node 1 may directly obtain the identifier of the terminal device from the last serving node, or may obtain the identifier of the terminal device from another node, for example, a previous maintenance node. This is not specifically limited herein.

In this embodiment of this application, after the SE-RNTI is introduced to the terminal device in the idle state, both the RAN node and the core network have the identifier of the terminal device in the idle state, so that the RAN node and the core network have a unified understanding of the identifier of the terminal device, which helps send a subsequent paging message.

If the terminal device is a terminal device in an inactive state, the terminal device may be indicated by using an inactive-radio network temporary identifier (inactive-radio network temporary identifier, I-RNTI) or an S-TMSI.

If the terminal device is a passive terminal device, a part of the identifier of the terminal device corresponds to the identifier of the current maintenance node or an identifier of a used beam, and the other part corresponds to the passive terminal device, and may be indicated by using a shared identifier. The shared identifier may indicate a plurality of passive terminal devices in a same cell or a plurality of passive terminal devices that use a same beam. A plurality of terminal devices with a same shared identifier are distinguished based on different sensing information.

In this embodiment of this application, because the passive terminal device does not need to receive a paging message, the maintenance node may configure the shared identifier for the passive terminal device, and locally store the shared identifier, to reduce a requirement for a large quantity of identifiers.

In this embodiment of this application, a value of 2 bits may be used to indicate three types of terminal devices: the passive terminal device, the terminal device in the idle state, or the terminal device in the inactive state, or 1 bit may be used to distinguish between an active terminal device and the passive terminal device.

In this embodiment of this application, the sensing information can enable the RAN node to perform sensing-based localization on the passive terminal device and the terminal device in the idle state, and avoid a problem of additional power consumption, signaling overheads, and a delay due to sensing-based localization on the terminal device in the inactive state or the connected state in a case of no data transmission or no channel-associated opportunity. Because a discontinuous reception (discontinuous reception, DRX) cycle is configured for the terminal device in the inactive state or the idle state, the beam information in the sensing information can enable the RAN node to reduce, when the terminal device wakes up, a delay and power consumption caused by beam alignment. In addition, because the sensing measurement performed by the RAN node on the terminal device may be transparent to the terminal device, that is, the terminal device does not sense the sensing measurement signal sent by the RAN node, power consumption of the terminal device is reduced.

The node 1 performs determining based on the obtained sensing information. If the node 1 finds that signal strength to the terminal device is less than a preset value, step 304 is performed. If the node 1 receives signal strength from the node 2 to the terminal device, step 307 is performed.

304: The node 1 sends a sensing request message to the node 2.

The node 1 needs to determine, from neighboring nodes, a target node that meets a change condition. The node 1 sends the sensing request message to the node 2, where the sensing request message includes information used by the node 2 to determine a to-be-sensed target and a sensing measurement feedback requirement. The information used by the node 2 to determine the to-be-sensed target may be the location information of the terminal device relative to the node 1 or the node 2, or may be the shape, the material, the size, or the image of the terminal device, or may be the identifier of the terminal device. This is not specifically limited herein. The sensing measurement feedback requirement indicates a measurement quantity that needs to be obtained through sensing measurement by the node 2, where the measurement quantity includes at least one of a distance, a speed, an angle, signal strength, a delay, a component of each path of a multipath, beam information, measurement time, a time interval, and a quantity of measurements, and further includes geographical locations or movement trajectories at different time points. The measurement quantity that needs to be obtained through sensing measurement corresponds to the sensing information obtained by the node 1.

In practice, if the node 2 has the SEMF, the sensing request message may include the change condition, that is, a precision requirement and/or a delay requirement corresponding to the measurement quantity. The node 2 determines whether the change condition is met.

In this embodiment of this application, the sensing request message may alternatively be carried in a handover preparation (handover preparation) message.

305: The node 2 performs sensing measurement on the terminal device.

The node 2 determines, based on the sensing request message sent by the node 1, the terminal device on which the sensing measurement needs to be performed. The node 2 may send the sensing measurement signal to the terminal device, and the node 2 receives a reflected signal of the sensing measurement signal, and obtains a sensing measurement result based on the reflected signal. The node 2 may alternatively perform receiving sensing measurement based on the sensing measurement signal from the node 1 in a receive/transmit separation manner. To be specific, the node 1 sends the sensing measurement signal, and the node 2 receives a reflected signal of the sensing measurement signal, and obtains a sensing measurement result based on the reflected signal. This is not specifically limited herein.

306: The node 2 sends a feedback message to the node 1.

The node 2 may directly send the sensing measurement result as the feedback message to the node 1. If the node 2 has the SEMF, the node 2 may alternatively first obtain measurement information based on the sensing measurement result, and then send the measurement information as the feedback message to the node 1. If the sensing request message received by the node 2 further includes the change condition, the node 2 may alternatively determine, based on the change condition, whether the measurement information meets the precision requirement and/or the delay requirement, for example, whether an error of the measurement information is less than a threshold. If the measurement information meets the precision requirement and/or the delay requirement, the node 2 sends a determining result to the node 1, to indicate that the node 2 meets the change condition.

307: The node 1 determines whether the node 2 meets the change condition.

If the node 1 receives the feedback message from the node 2, the node 1 determines, based on the feedback message, whether the node 2 meets the change condition. If the feedback message includes the sensing measurement result, the node 1 obtains the measurement information through calculation based on the sensing measurement result. If the feedback message includes the measurement information, the node 1 directly uses the measurement information for determining. The node 1 determines whether signal strength from the node 2 to the terminal device is greater than a threshold, and whether a deviation and/or a comparison deviation between the measurement information and a reference value are/is less than a threshold. Specifically, the node 1 may further determine whether duration in which the signal strength from the node 2 to the terminal device is greater than the threshold is greater than preset duration, or whether a quantity of times that signal strength from the node 2 to the terminal device is greater than the threshold exceeds a preset value.

The node 1 may further determine whether the deviation between the measurement information and the reference value is less than a specific value within specific time. The reference value is determined by the node 1 based on the sensing information, and the reference value includes a reference coordinate location, a reference distance, a reference angle, or a reference speed of the terminal device. When the deviation is less than the specific value, the node 1 may determine that a matching degree between the terminal device and a reference target is high. In practice, the measurement result of the node 2 may include a measurement result for another object, and the measurement result for the another object may be greatly different from a measurement result of the node 1 for the terminal device. In this case, this part of measurement result may be excluded, or another measure may be taken, for example, repeating measurement. This is not specifically limited herein.

When the signal strength from the node 2 to the terminal device is greater than a preset value and the deviation is less than the threshold, the node 1 determines that the node 2 meets the change condition.

If the feedback message includes the determining result, the node 1 determines that the node 2 meets the change condition.

If the node 1 receives the signal strength from the node 2 to the terminal device, and steps 304 to 306 are not performed, the node 1 determines, based on the signal strength from the node 2 to the terminal device, whether the node 2 meets the change condition.

In practice, the node 1 may determine that a plurality of nodes meet the change condition, and the node 1 selects one of the nodes that meet the change condition as the target node.

308: The node 1 sends a change request to the node 2.

After the node 1 determines the target node, the node 1, serving as the source node, sends the change request to the node 2 serving as the target node, to request the node 2 to serve as the maintenance node of the terminal device. The change request includes an identifier of the node 1, an identifier of the node 2, and the sensing information.

In this embodiment of this application, the node 1 sends the change request to the node 2, so that the node 2 can locate the terminal device or obtain a feature of the terminal device based on the sensing information in the change request, thereby implementing sensing management on the terminal device. When the node 2 receives a paging message, the target node may locate the terminal device and page the terminal device. Therefore, the last serving node of the terminal device does not need to send a paging beam to a plurality of cells in an RNA or a TA in which the terminal device is located, and needs to send a paging beam only to a cell in which the terminal device is located. This reduces invalid beams caused by a failure to page the terminal device, thereby avoiding resource waste and additional signaling overheads.

309: The node 2 maintains the terminal device.

After the node 2 receives the change request, the node 2 determines whether to serve as a maintenance node of the terminal device. If the node 2 determines to serve as the maintenance node of the terminal device, the node 2 is responsible for maintaining the terminal device. The node 2 stores the sensing information in the change request as the sensing information of the terminal device maintained by the node 2, and then further performs updating and maintaining through sensing measurement.

310: The node 2 sends a change acknowledgment message to the node 1.

After receiving the change request of the node 1, the node 2 starts a timer, and after preset duration, the node 2 sends the change acknowledgment request to the node 1, to indicate that the node 2 has served as the maintenance node of the terminal device.

311: The node 1 updates the identifier of the maintenance node.

The node 1 changes the identifier of the current maintenance node of the terminal device to the identifier of the node 2. When the node 1 receives a paging message, the node 1 may send the paging message to the node 2 based on the identifier of the current maintenance node of the terminal device, and then the node 2 sends the paging message to the terminal device.

312: The node 2 updates the identifier of the maintenance node.

The node 2 changes the identifier of the current maintenance node of the terminal device to the identifier of the node 2. When the node 2 receives the paging message, the node 2 may find, based on the identifier of the current maintenance node of the terminal device, that the terminal device is maintained by the node 2. Therefore, the node 2 may directly locate the terminal device based on the locally stored sensing information, and send the paging message to the terminal device.

313: The node 1 sends an indication message to a node 3.

The node 1 sends the indication message to the node 3, where the indication message includes the identifier of the terminal device and the identifier of the maintenance node. The node 3 may be a core network node, or may be the last serving node of the terminal device. The core network or the last serving node of the terminal device may directly send the paging message to the node 2 based on the identifier of the terminal device and the identifier of the maintenance node.

314: The node 2 sends an indication message to the node 3.

The node 2 sends the indication message to the node 3, where the indication message includes the identifier of the terminal device and the identifier of the maintenance node. The core network or the last serving node of the terminal device may directly send the paging message to the node 2 based on the identifier of the terminal device and the identifier of the maintenance node.

In practice, only one of step 311 to step 314 may be performed. In this embodiment of this application, any one of step 311 to step 314 may be performed before step 308, or step 308 may be performed before any one of step 311 to step 314. This is not specifically limited herein.

In this embodiment of this application, the identifier of the current maintenance node of the terminal device is updated, and the indication message is sent to the core network or the indication message is sent to the last serving node of the terminal device, so that the paging message can be accurately sent to the current maintenance node of the terminal device. This avoids transmission of invalid signaling and generation of invalid beams, and reduces resource waste and signaling overheads.

2. The RAN node maintains the terminal device via a relay node.

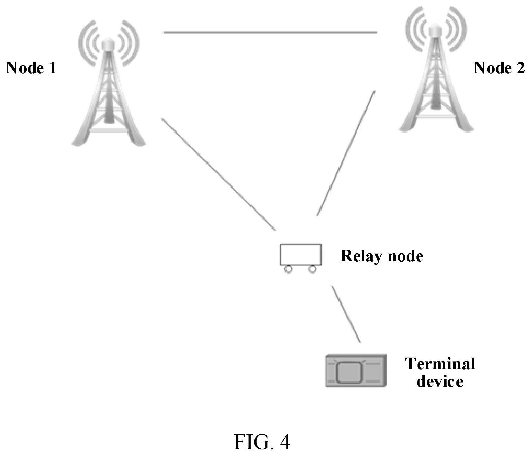

Refer to FIG. 4. In this scenario, serving as a maintenance node of the terminal device, a node 1 maintains the terminal device via a relay node. The relay node performs sensing measurement on the terminal device, and then feeds back a sensing measurement result to the node 1. The maintenance node of the terminal device changes with the relay node. When the node 1 finds that signal quality to the relay node is not good enough, for example, signal quality between the node 1 and the relay node is lower than a first threshold, or signal quality between a node 2 and the relay node is greater than a second threshold, the maintenance node of the terminal device may be changed from the node 1 to the node 2. The relay node may be a network node, or may be a UE node.

In this embodiment of this application, using the relay node to perform sensing measurement may expand a sensing measurement range of a base station, and may also share load of the base station on sensing measurement. Compared with directly using the base station to perform sensing measurement, using the relay node to perform sensing measurement in a local area may further reduce interference in a cell and reduce power consumption of the base station.

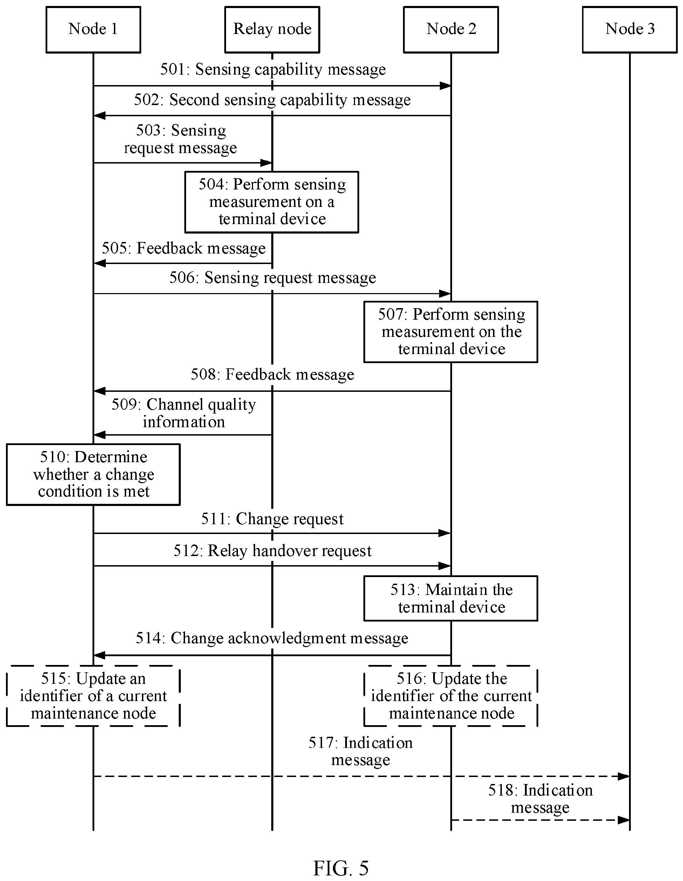

Refer to FIG. 5. In this scenario, a mobile sensing method in an embodiment of this application includes the following steps.

501: A node 1 sends a sensing capability message to a node 2.

502: The node 2 sends a sensing capability message to the node 1.

Step 501 and step 502 in this embodiment are similar to step 301 and step 302 in the embodiment shown in FIG. 3. Details are not described herein again.

503: The node 1 sends a sensing request message to a relay node.

Signal quality from the node 1 to a terminal device is weaker than signal quality from the relay node to the terminal device. Therefore, the node 1 needs to maintain the terminal device via the relay node. The node 1 sends the sensing request message to the relay node, and the relay node performs sensing measurement on the terminal device.

504: The relay node performs sensing measurement on the terminal device.

The relay node sends a sensing measurement signal to the terminal device, and receives a reflected signal of the sensing measurement signal. The relay node obtains a sensing measurement result based on the reflected signal.

505: The relay node sends a feedback message to the node 1.

The relay node sends the sensing measurement result and associated relay information to the node 1, and the node 1 obtains sensing information through calculation based on the sensing measurement result. The associated relay information includes at least one of an identifier of the relay node, beam information of a relay link, location information of the relay node, and channel quality from the node 1 to the relay node.

506: The node 1 sends a sensing request message to the node 2.

507: The node 2 performs sensing measurement on the terminal device.

508: The node 2 sends a feedback message to the node 1.

Step 506 to step 508 in this embodiment are similar to step 304 to step 306 in the embodiment shown in FIG. 3. Details are not described herein again.

509: The relay node sends channel quality information to the node 1.

The relay node measures SSBs or CSI-RSs from the node 1 and the node 2, to obtain channel quality from the relay node to the node 1 and channel quality from the relay node to the node 2. The relay node sends the channel quality information to the node 1, where the channel quality information includes the channel quality from the relay node to the node 1 and the channel quality from the relay node to the node 2.

510: The node 1 determines whether the node 2 meets a change condition.

The node 1 performs determining based on the feedback message sent by the node 2 and the channel quality information sent by the relay node. When the following conditions are met, the node 1 determines that the node 2 is a target node that meets the change condition:
channel quality between the terminal device and the relay node is greater than a threshold;
the channel quality from the relay node to the node 2 is continuously better than the channel quality from the relay node to the node 1;
self-sensing quality from the node 1 to the terminal device is worse than self-sensing quality from the relay node to the terminal device; and
self-sensing quality from the node 2 to the terminal device is worse than the self-sensing quality from the relay node to the terminal device.

511: The node 1 sends a change request to the node 2.

After the node 1 determines the target node, serving as a source node, the node 1 sends the change request to the node 2 serving as the target node, to request the node 2 to serve as a maintenance node of the terminal device. The change request includes an identifier of the node 1, an identifier of the node 2, and an identifier of the relay node.

512: The node 1 sends a relay handover request to the node 2.

The node 1 sends the relay handover request to the node 2, to change a node connected to the relay node from the node 1 to the node 2, and the node 2 maintains the terminal device via the relay node. The sensing information corresponding to the terminal device may be included in the change request, or may be included in the relay handover request. The node 1 may send the associated relay information to the node 2 through the relay handover request, or may send the associated relay information to the node 2 through the change request.

513: The node 2 maintains the terminal device.

The node 2 sends a sensing request message to the relay node, and the relay node sends the sensing measurement signal to the terminal device, and then obtains a sensing measurement result based on a reflected signal of the sensing measurement signal. The relay node sends the sensing measurement result to the node 2, and the node 2 updates the associated relay information and the sensing information based on the sensing measurement result.

514: The node 2 sends a change acknowledgment message to the node 1.

515: The node 1 updates the identifier of the maintenance node.

516: The node 2 updates the identifier of the maintenance node.

517: The node 1 sends an indication message to a node 3.

518: The node 2 sends an indication message to the node 3.

Step 514 to step 518 in this embodiment are similar to step 310 to step 314 in the embodiment shown in FIG. 3. Details are not described herein again.

3. The node 1 maintains the terminal device via a management node.

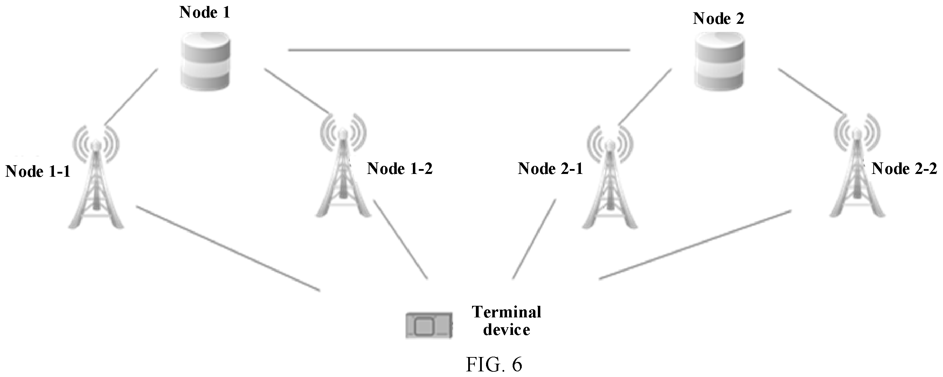

Refer to FIG. 6. In this scenario, both a node 1 and a node 2 are centralized SEMF nodes. Serving as a maintenance node of the terminal device, the node 1 maintains the terminal device via the management node. A node 1-1 and/or a node 1-2 under the node 1 perform sensing measurement on the terminal device, and then feed back a sensing measurement result to the node 1. When signal quality from the node 1-1 to the terminal device is not good enough, for example, is lower than a first threshold, or when signal quality from a node 2-1 to the terminal device is greater than a second threshold, the maintenance node of the terminal device may be changed from the node 1 to the node 2. The centralized SEMF node may be an independent node, for example, a cloud RAN node, a network node having an SEMF function, or a core network node. The centralized SEMF node may have a plurality of management nodes. The following uses two management nodes as an example for description.

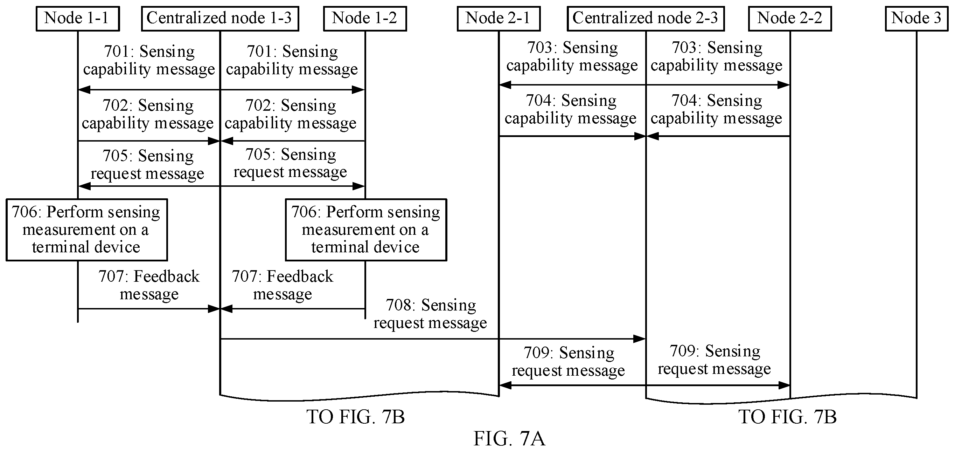

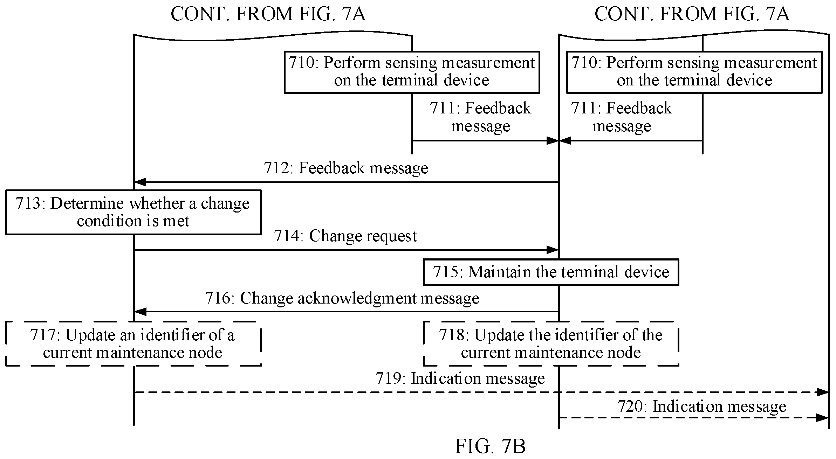

Refer to FIG. 7A and FIG. 7B. In this scenario, a mobile sensing method in an embodiment of this application includes the following steps.

701: A node 1 sends a sensing capability message to a node 1-1 and a node 1-2.

The node 1 is a centralized SEMF node, has an SEMF, and sends a sensing capability message to a management node of the node 1, where the capability message indicates that the node 1 has the SEMF.

In practice, the sensing capability message may further include a duplex capability of the node 1, and indicates that the node has a full-duplex capability or a half-duplex capability.

702: The node 1-1 or the node 1-2 sends a sensing capability message to the node 1.

The node 1-1 or the node 1-2 has the SEMF, and sends the sensing capability message to the node 1, to indicate that the node has the SEMF, or may indicate that the node has a full-duplex capability or a half-duplex capability.

703: A node 2 sends a sensing capability message to a node 2-1 and a node 2-2.

The node 2 is a centralized SEMF node, has the SEMF, and sends the sensing capability message to a management node of the node 2, where the capability message indicates that the node 2 has the SEMF, or may indicate that the node has a full-duplex capability or a half-duplex capability.

704: The node 2-1 or the node 2-2 sends a sensing capability message to the node 2.

The node 2-1 or the node 2-2 has the SEMF, and sends the sensing capability message to the node 2, to indicate that the node has the SEMF, or may indicate that the node has a full-duplex capability or a half-duplex capability.

705: The node 1 sends a sensing request message to the node 1-1 and the node 1-2.

The node 1 maintains the terminal device via the management node, and the node 1 sends the sensing request message to the management node 1-1 and the management node 1-2, to request the node 1-1 and the node 1-2 each to send a sensing measurement signal to the terminal device. The sensing request message includes information used to locate the terminal device and a sensing measurement feedback requirement.

706: The node 1-1 and the node 1-2 perform sensing measurement on the terminal device.

The node 1-1 and the node 1-2 each send the sensing measurement signal to the terminal device, and respectively obtain a sensing measurement result based on a reflected signal of the sensing measurement signal sent by each of the node 1-1 and the node 1-2.

707: The node 1-1 and the node 1-2 each send a feedback message to the node 1.

The node 1-1 and the node 1-2 each send the sensing measurement result to the node 1 by using the feedback message, and the node 1 obtains sensing information through calculation based on the received sensing measurement result. When the node 1 finds that signal quality from the node managed by the node 1 to the terminal device deteriorates, the node 1 performs step 708.

708: The node 1 sends a sensing request message to the node 2.

Step 708 in this embodiment is similar to step 304 in the embodiment shown in FIG. 3. Details are not described herein again.

709: The node 2 sends a sensing request message to the node 2-1 and the node 2-2.

The node 2 performs sensing measurement on the terminal device via the node managed by the node 2, and the node 2 sends the sensing request message to the node 2-1 and the node 2-2, to request the node 2-1 and the node 2-2 each to send a sensing measurement signal to the terminal device. The sensing request message includes information used to locate the terminal device and a sensing measurement feedback requirement.

710: The node 2-1 and the node 2-2 perform sensing measurement on the terminal device.

The node 2-1 and the node 2-2 each send the sensing measurement signal to the terminal device, and respectively obtain a sensing measurement result based on a reflected signal of the sensing measurement signal sent by each of the node 2-1 and the node 2-2.

711: The node 2-1 and the node 2-2 each send a feedback message to the node 2.

The node 2-1 and the node 2-2 each send the sensing measurement result to the node 2 by using the feedback message, and the node 2 may obtain measurement information through calculation based on the received sensing measurement result.

712: The node 2 sends a feedback message to the node 1.

713: The node 1 determines whether the node 2 meets a change condition.

714: The node 1 sends a change request to the node 2.

715: The node 2 maintains the terminal device.

716: The node 2 sends a change acknowledgment message to the node 1.

717: The node 1 updates an identifier of the maintenance node.

718: The node 2 updates the identifier of the maintenance node.

719: The node 1 sends an indication message to a node 3.

720: The node 2 sends an indication message to the node 3.

Step 712 to step 720 in this embodiment are similar to step 306 to step 314 in the embodiment shown in FIG. 3. Details are not described herein again.

4. A centralized node initiates a change of a current maintenance node of the terminal device.

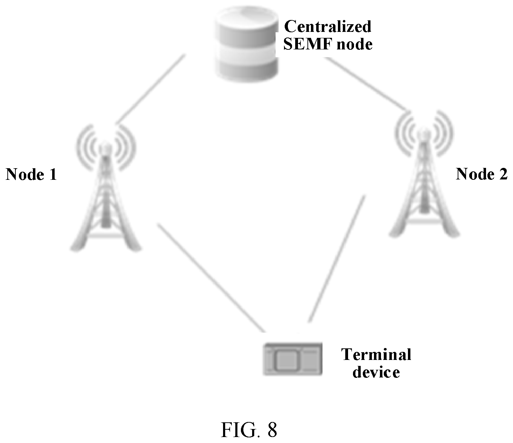

Refer to FIG. 8. In this scenario, the terminal device is maintained by a centralized SEMF node via a node 1. When the centralized SEMF node finds that channel quality from the node 1 to the terminal device is weaker than channel quality from a node 2 to the terminal device, the centralized SEMF node maintains the terminal device via the node 2, and updates local link information.

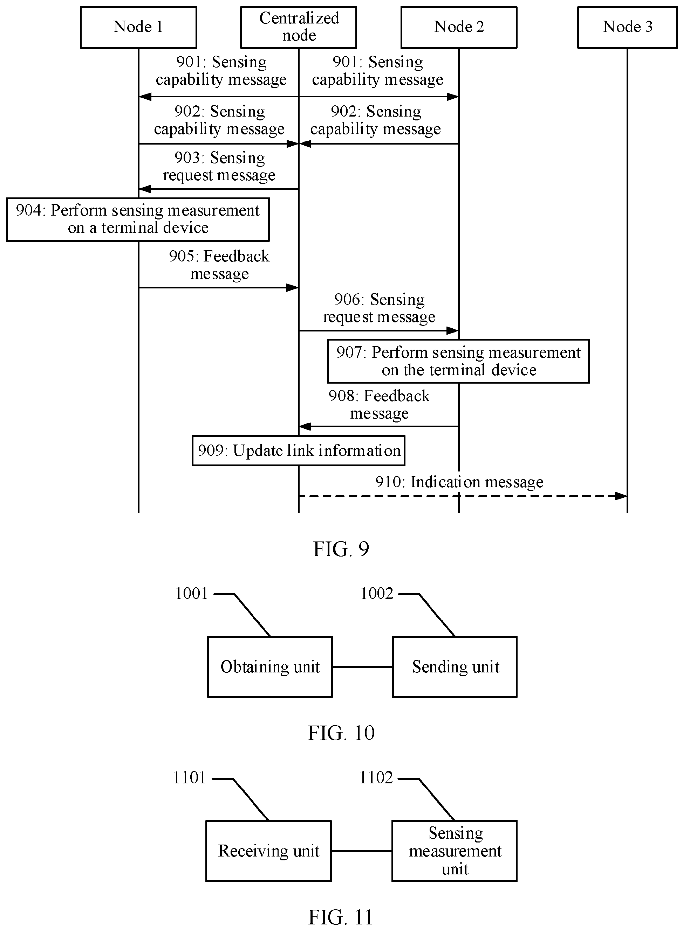

Refer to FIG. 9. In this scenario, a mobile sensing method in an embodiment of this application includes the following steps.

901: A centralized node sends a sensing capability message to a node 1 and a node 2.

902: The node 1 and the node 2 each send a sensing capability message to the centralized node.

Step 901 and step 902 in this embodiment are similar to step 701 and step 702 in the embodiment shown in FIG. 7A and FIG. 7B. Details are not described herein again.

In practice, step 901 and step 902 may not be performed, and step 903 is directly performed.

903: The centralized node sends a sensing request message to the node 1.

904: The node 1 performs sensing measurement on a terminal device.

905: The node 1 sends a feedback message to the centralized node.

Step 903 to step 905 in this embodiment are similar to step 705 to step 707 in the embodiment shown in FIG. 7A and FIG. 7B. Details are not described herein again.

When the centralized node finds that channel quality from the node 1 to the terminal device deteriorates, or when the centralized node finds that channel quality from the node 2 to the terminal device is stronger, step 906 is performed.

906: The centralized node sends a sensing request message to the node 2.

907: The node 2 performs sensing measurement on the terminal device.

908: The node 2 sends a feedback message to the centralized node.

Step 906 to step 908 in this embodiment are similar to step 705 to step 707 in the embodiment shown in FIG. 7A and FIG. 7B. Details are not described herein again.

909: The centralized node updates link information.

If the centralized node determines that the node 2 is a target node, the centralized node updates the locally stored link information. The centralized node replaces an identifier of the node 1 with an identifier of the node 2. If the node 1 is further connected to a relay node, link information, beam information, channel quality information, or the like from the node 2 to the relay node is further added to the centralized node.

910: The centralized node sends an indication message to the node 3.

The indication information sent by the centralized node or the node 2 to the node 3 includes an identifier of the centralized node or the identifier of the node 2. Specifically, if the centralized node has a communication function, the indication message includes the identifier of the centralized node; or if the centralized node does not have a communication function, the indication message includes the identifier of the node 2.

In practice, the centralized node may be located in a core network or may be used as a functional entity of the core network. In this case, step 909 may not be performed.

The mobile sensing method in embodiments of this application is described above. The following describes the source node and the target node in embodiments of this application. Referring to FIG. 10, an embodiment of the source node in embodiments of this application includes:
an obtaining unit 1001, configured to obtain sensing information of a terminal device, where the sensing information includes location information; and
a sending unit 1002, configured to send a change request to a target node, where the change request includes the sensing information, and the change request is used to request the target node to maintain the terminal device.

Referring to FIG. 11, an embodiment of the target node in embodiments of this application includes:
a receiving unit 1101, configured to receive a change request from a source node, where the change request includes sensing information, and the sensing information includes location information; and
a sensing measurement unit 1102, configured to perform sensing measurement on a terminal device.

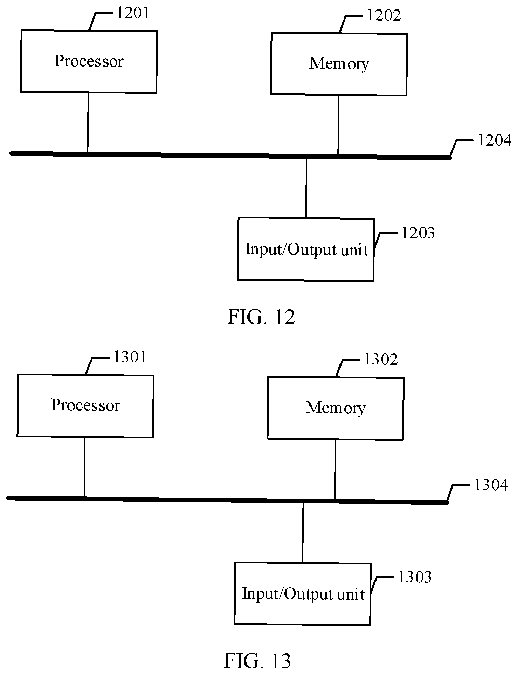

The following describes a source node according to an embodiment of this application. FIG. 12 is a diagram of a structure of a source node according to an embodiment of this application.

The source node specifically includes:
a processor 1201, a memory 1202, an input/output unit 1203, and a bus 1204, where
the processor 1201 is connected to the memory 1202, the input/output unit 1203, and the bus 1204;
the memory 1202 stores a program; and
the processor 1201 executes the program in the memory 1202, to cause the source node to perform the method in the foregoing embodiments.

FIG. 13 is a diagram of a structure of a target node according to an embodiment of this application.

The target node specifically includes:
a processor 1301, a memory 1302, an input/output unit 1303, and a bus 1304, where
the processor 1301 is connected to the memory 1302, the input/output unit 1303, and the bus 1304;
the memory 1302 stores a program; and
the processor 1301 executes the program in the memory 1302, to enable the target node to perform the method in the foregoing embodiments.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A mobile sensing method, wherein the method comprises:
obtaining sensing information of a terminal device, wherein the sensing information comprises location information; and
sending a change request to a target node, wherein the change request comprises the sensing information, and the change request is used to request the target node to maintain the terminal device.

2. The mobile sensing method according to claim 1, wherein the location information comprises at least one of the following:
a coordinate location, a distance, a speed, an angle, or a movement direction of the terminal device.

3. The mobile sensing method according to claim 1 or 2, wherein the sensing information further comprises at least one of the following:
signal strength from a source node to the terminal device or from the target node to the terminal device, a delay, a Doppler frequency shift, a component of each path of a multipath, beam information, measurement time, a time interval, a quantity of measurements, and an identifier, a type, a shape, a material, a size, or an image of the terminal device.

4. The mobile sensing method according to any one of claims 1 to 3, wherein the terminal device comprises a low-power terminal device or a terminal device in a non-connected state, and the terminal device in the non-connected state comprises a passive terminal device, a terminal device in an idle state, or a terminal device in an inactive inactive state.

5. The mobile sensing method according to claim 4, wherein if the terminal device is a low-power terminal device or a terminal device in an idle state, the identifier of the terminal device is a sensing-radio network temporary identifier SE-RNTI or a shortened-temporary mobile subscription identifier S-TMSI, the SE-RNTI comprises a first identifier and a second identifier, the first identifier corresponds to the terminal device, the second identifier corresponds to a maintenance node of the terminal device, and the maintenance node is configured to maintain the terminal device; or
if the terminal device is a passive terminal device, the identifier of the terminal device comprises a third identifier and a fourth identifier, the third identifier corresponds to the terminal device, the fourth identifier corresponds to a maintenance node of the terminal device and/or a beam used by the terminal device, and the maintenance node is configured to maintain the terminal device.

6. The mobile sensing method according to claim 5, wherein the third identifier is a shared identifier, and the shared identifier identifies the passive terminal device and at least one other passive terminal device located in a same cell as the passive terminal device;
and/or
the shared identifier identifies the passive terminal device and at least one other passive terminal device that uses the same beam as the passive terminal device.

7. The mobile sensing method according to any one of claims 1 to 6, wherein after sending the change request to the target node, the method further comprises:
receiving a change acknowledgment message from the target node.

8. The mobile sensing method according to any one of claims 1 to 7, wherein before sending the change request to the target node, the method further comprises:
receiving a first feedback message, wherein the first feedback message comprises a sensing measurement result or a determining result of the terminal device.

9. The mobile sensing method according to any one of claims 1 to 8, wherein after obtaining the sensing information of the terminal device, the method further comprises:
sending a relay handover request to the target node, wherein the relay handover request indicates a relay node to migrate to the target node, the relay node is configured to sense the terminal device, and the relay handover request comprises the sensing information.

10. The mobile sensing method according to any one of claims 1 to 9, wherein after obtaining the sensing information of the terminal device, the method further comprises:
sending a first indication message to a core network or a last serving node of the terminal device, wherein the first indication message comprises an identifier of the target node and the identifier of the terminal device.

11. The mobile sensing method according to any one of claims 1 to 10, wherein obtaining the sensing information of the terminal device comprises:
receiving the sensing information;
or
obtaining the sensing information of the terminal device through sensing measurement.

12. The mobile sensing method according to any one of claims 1 to 11, wherein obtaining the sensing information of the terminal device comprises:
obtaining the sensing measurement result of the terminal device; and
obtaining the sensing information based on the sensing measurement result.

13. The mobile sensing method according to any one of claims 1 to 12, wherein before sending the change request to the target node, the method further comprises:
determining the target node based on the signal strength from the source node to the terminal device;
and/or
determining the target node based on the signal strength from the target node to the terminal device.

14. The mobile sensing method according to any one of claims 1 to 13, wherein before obtaining the sensing information of the terminal device, the method further comprises:
sending a first capability message to the target node, wherein the first capability message indicates that the source node has a sensing management function SEMF;
and/or
receiving a second capability message from the target node, wherein the second capability message indicates that the target node has the SEMF.

15. A mobile sensing method, wherein the method comprises:
receiving a change request from a source node, wherein the change request comprises sensing information, and the sensing information comprises location information; and
performing sensing measurement on a terminal device.

16. The mobile sensing method according to claim 15, wherein the location information comprises at least one of the following:
a coordinate location, a distance, a speed, an angle, or a movement direction of the terminal device.

17. The mobile sensing method according to claim 16, wherein the sensing information further comprises at least one of the following:
signal strength from the source node to the terminal device or from a target node to the terminal device, a delay, a Doppler frequency shift, a component of each path of a multipath, measurement time, a time interval, a quantity of measurements, and an identifier, a type, beam information, a shape, a material, a size, or an image of the terminal device.

18. The mobile sensing method according to any one of claims 15 to 17, wherein the terminal device comprises a low-power terminal device or a terminal device in a non-connected state, and the terminal device in the non-connected state comprises a passive terminal device, a terminal device in an idle state, or a terminal device in an inactive inactive state.

19. The mobile sensing method according to claim 18, wherein if the terminal device is a low-power terminal device or a terminal device in an idle idle state, the identifier of the terminal device is a sensing-radio network temporary identifier SE-RNTI or a shortened-temporary mobile subscription identifier S-TMSI, the SE-RNTI comprises a first identifier and a second identifier, the first identifier corresponds to the terminal device, the second identifier corresponds to a maintenance node of the terminal device, and the maintenance node is configured to maintain the terminal device; or
if the terminal device is a passive terminal device, the identifier of the terminal device comprises a third identifier and a fourth identifier, the third identifier corresponds to the terminal device, the fourth identifier corresponds to a maintenance node of the terminal device or a beam used by the terminal device, and the maintenance node is configured to maintain the terminal device.

20. The mobile sensing method according to claim 19, wherein the third identifier is a shared identifier, and the shared identifier identifies the passive terminal device and at least one other passive terminal device located in a same cell as the passive terminal device;
or
the shared identifier identifies the passive terminal device and at least one other passive terminal device that uses the same beam as the passive terminal device.

21. The mobile sensing method according to any one of claims 15 to 20, wherein after performing sensing measurement on the terminal device, the method further comprises:
sending a change acknowledgment message to the source node.

22. The mobile sensing method according to any one of claims 15 to 21, wherein before receiving the change request from the source node, the method further comprises:
sending a first feedback message to the source node, wherein the first feedback message comprises a sensing measurement result or a determining result of the terminal device.

23. The mobile sensing method according to any one of claims 15 to 22, wherein before performing sensing measurement on the terminal device, the method further comprises:
receiving a relay handover request from the source node, wherein the relay handover request indicates a relay node to migrate to the target node.

24. The mobile sensing method according to any one of claims 15 to 23, wherein the method further comprises:
sending a second indication message to a core network or a last serving node of the terminal device, wherein the second indication message comprises an identifier of the target node and the identifier of the terminal device.

25. The mobile sensing method according to any one of claims 15 to 24, wherein before receiving the change request from the source node, the method further comprises:
sending the sensing measurement result to the source node.

26. The mobile sensing method according to any one of claims 15 to 25, wherein before receiving the change request from the source node, the method further comprises:
sending, to the source node, signal state information from the target node to the terminal device.

27. The mobile sensing method according to any one of claims 15 to 26, wherein before receiving the change request from the source node, the method further comprises:
receiving a first capability message from the source node, wherein the first capability message indicates that the source node has a sensing management function SEMF;
and/or
sending a second capability message to the source node, wherein the second capability message indicates that the target node has the SEMF.

28. A communication apparatus, comprising:
an obtaining unit, configured to obtain sensing information of a terminal device, wherein the sensing information comprises location information; and
a sending unit, configured to send a change request to a target node, wherein the change request comprises the sensing information, and the change request is used to request the target node to maintain the terminal device.

29. A communication apparatus, comprising:
a receiving unit, configured to receive a change request from a source node, wherein the change request comprises sensing information, and the sensing information comprises location information; and
a sensing measurement unit, configured to perform sensing measurement on a terminal device.

30. A communication apparatus, comprising:
a processor and a memory, wherein the processor is coupled to the memory;
the memory is configured to store a program; and
the processor is configured to execute the program in the memory, to enable the source node to perform the method according to any one of claims 1 to 14.

31. A communication apparatus, comprising:
a processor and a memory, wherein the processor is coupled to the memory;
the memory is configured to store a program; and
the processor is configured to execute the program in the memory, to enable the target node to perform the method according to any one of claims 15 to 27.

32. A mobile sensing system, comprising:
the communication apparatus according to any one of claims 1 to 14, and the communication apparatus according to any one of claims 15 to 27;
or
a relay node, the communication apparatus according to any one of claims 1 to 14, and the communication apparatus according to any one of claims 15 to 27;
or
a core network node, the communication apparatus according to any one of claims 1 to 14, and the communication apparatus according to any one of claims 15 to 27.

33. A computer-readable storage medium, comprising instructions, wherein when the instructions are run on a computer, the computer is caused to perform the method according to any one of claims 1 to 14, or the computer is caused to perform the method according to any one of claims 15 to 27.

34. A computer program product comprising instructions, wherein when the computer program product runs on a computer, the computer is caused to perform the method according to any one of claims 1 to 14, or the computer is caused to perform the method according to any one of claims 15 to 17.
